# EUROPEAN PATENT APPLICATION

(11) **EP 3 895 517 A2**
(43) Date of publication of application: **20.10.2021**
(21) Application number: 21167673.9
(22) Date of filing: 09.04.2021
(51) Int. Cl.: A01D 34/78, A01D 34/58

(54) **CONTROL SYSTEM OF LAWN MOWING VEHICLE**

(30) Priority: 14.04.2020 JP 2020072125
(71) Applicant: Kanzaki Kokyukoki Mfg. Co., Ltd., Amagasaki Hyogo (JP); Yanmar Holdings Co., Ltd., Osaka-shi, Osaka (JP)
(72) Inventor: OGURA, Kohei, Amagasaki, Hyogo (JP); KIYOOKA, Koji, Amagasaki, Hyogo (JP); YAMANAMI, Hidetaka, Amagasaki, Hyogo (JP); OGATA, Kenji, Osaka-shi, Osaka (JP); KUROIWA, Yuya, Osaka-shi, Osaka (JP)
(74) Representative: Wunderlich & Heim Patentanwälte Partnerschaftsgesellschaft mbB

(57) **Abstract**

A control system (80) includes at least one continuously variable transmission (30, 31) drivingly connected to two left and right wheels (12, 13), an acceleration instruction unit (22, 23), a parking brake instruction sensor (52), a lawn mower (18), and a control device (40). The control device (40), during the drive of the lawn mower (18), stops the drive of the lawn mower (18) after the revolution speed of each of the two wheels (12, 13) or the revolution speed of the at least one continuously variable transmission (30, 31) has become zero (0) or within a predetermined range near zero (0), and during stop control of the lawn mower (18), drives the lawn mower (18) when a target revolution speed, issued by the acceleration instruction unit (22, 23), of the two wheels (12, 13) or of the at least one continuously variable transmission (30, 31) is not zero (0) and the operation of the parking brake is not instructed.

## Description

### BACKGROUND

### Technical Field

The present disclosure relates to a control system of a lawn mowing vehicle including at least one continuously variable transmission connected to two left and right wheels, a lawn mower, and a control device that controls the drive of the continuously variable transmission and of the lawn mower.

### Related Art

A lawn mowing vehicle equipped with a lawn mower driven to perform a lawn mowing operation has been conventionally known. Further, in such a mowing vehicle, a mowing vehicle including a left wheel and a right wheel independently driven respectively by an electric motor, and caster wheels, is also considered.

Further, as a lawn mowing vehicle, there is a self-traveling lawn mowing vehicle which an operator can get in and perform operations for traveling and mowing, and this is called a riding type lawn mowing vehicle. Examples of the lawn mower include a propeller-type rotary blade lawn mower rotary tool and the like.

Riding-type lawn mowing vehicles are used exclusively on so-called off-road situations, such as a garden, and move on the ground surface in order to perform the lawn mowing work.

For example, Japanese Unexamined Patent Application No. 2014-45637 describes a riding-type electric lawn mowing vehicle in which travel motors as left and right electric motors are connected to wheels on the corresponding sides, and travel of the two left and right wheels are driven independently by the two left and right travel motors. Two operation levers on respective left and right sides of a driver seat instruct rotation of the two left and right travel motors.

In the configuration described in Japanese Unexamined Patent Application No. 2014-45637, a lawn mower is driven or stopped according to the on or off operation of a deck switch of the driver (lawn mower drive switch). As a result, in some situations, the lawn mower may be wastefully driven at the time travel of the vehicle is stopped, and power of a battery for driving the lawn mower is wastefully consumed, which may shorten the workable time. On the other hand, it is conceived that, in order to suppress power consumption of the battery, the driver, at the time travel of the vehicle stopped, turns off the deck switch to thereby stop the lawn mower, and, at the time of restart of travel of the vehicle, turns the deck switch on again to restart driving of the lawn mower. However, the on/off operations may be frequent, which may require a great deal of time and effort by the driver.

### SUMMARY

It is an object of the present disclosure to suppress power consumption of a battery for driving a lawn mower and to thereby prolong the workable time, in a control system of a lawn mowing vehicle, without requiring a great deal of time and effort by a driver.

A first control system of a lawn mowing vehicle according to the present application includes: at least one continuously variable transmission drivingly connected to two left and right wheels; a revolution speed detection unit that detects a revolution speed of each of the two wheels, or a revolution speed of a rotation member in a power transmission path from the at least one continuously variable transmission to the wheels; an acceleration instruction unit that instructs acceleration of the at least one continuously variable transmission; a parking brake instruction sensor that detects that an operation of a parking brake that, for parking, brakes the continuously variable transmission or brakes a member to which power is transmitted from the continuously variable transmission, is instructed; a lawn mower; and a control device that independently controls drive of the at least one continuously variable transmission and drive of the lawn mower, wherein the control device, during the drive of the lawn mower, stops the drive of the lawn mower after the revolution speed of each of the two wheels or the rotational speed of the at least one continuously variable transmission has become zero (0) or within a predetermined range near zero (0) and during stop control of the lawn mower, drives the lawn mower when a target revolution speed, issued by the acceleration instruction unit, of the two wheels or of the at least one continuously variable transmission is not zero (0) and the operation of the parking brake is not instructed.

A second control system of a lawn mowing vehicle according to the present application includes: two left and right continuously variable transmissions drivingly connected to two left and right wheels; a revolution speed detection unit that detects a revolution speed of each of the two wheels, or a revolution speed of each of the two continuously variable transmissions; two left and right operation levers as acceleration instruction units; a neutral sensor detects that the two operation levers are in neutral positions to set a target revolution speed of the two continuously variable transmissions to zero (0), or to stop generation of a driving force of the two continuously variable transmissions; a parking brake instruction sensor that detects that an operation of a parking brake that, for parking, brakes the continuously variable transmission or brakes a member to which power is transmitted from the continuously variable transmission is instructed; a lawn mower; and a control device that independently controls drive of the two continuously variable transmissions and drive of the lawn mower; wherein the control device, during the drive of the lawn mower, stops the drive of the lawn mower after the revolution speed of each of the two wheels or the revolution speed of each of the two continuously variable transmission has become zero (0) or within a predetermined range near zero (0), and during stop control of the lawn mower, drives the lawn mower when each of the two operation levers is not in the neutral position and the operation of the parking brake is not instructed.

A third control system of a lawn mowing vehicle according to the present application includes: a continuously variable transmission drivingly connected to two left and right wheels; a revolution speed detection unit that detects a revolution speed of each of the two wheels, or a revolution speed of the continuously variable transmission; an accelerator pedal as an acceleration instruction unit; a neutral sensor detects that the accelerator pedal is in a neutral position to set a target revolution speed of the continuously variable transmission to zero (0), or to stop generation of a driving force of the continuously variable transmission; a parking brake instruction sensor that detects that an operation of a parking brake that, for parking, brakes the continuously variable transmission or brakes a member to which power is transmitted from the continuously variable transmission is instructed; a lawn mower; and a control device that independently controls drive of the continuously variable transmission and drive of the lawn mower; wherein the control device, during the drive of the lawn mower, stops the drive of the lawn mower after the revolution speed of each of the two wheels or the revolution speed of the continuously variable transmission has become zero (0) or within a predetermined range near zero (0), and during stop control of the lawn mower, drives the lawn mower when the accelerator pedal is not in the neutral position and the operation of the parking brake is not instructed.

A fourth control system of a lawn mowing vehicle according to the present application includes: at least one continuously variable transmission drivingly connected to two left and right wheels; a parking brake instruction sensor that detects that an operation of a parking brake that, for parking, brakes the continuously variable transmission or brakes a member to which power is transmitted from the continuously variable transmission is instructed; a lawn mower; and a control device that independently controls drive of the at least one continuously variable transmission and drive of the lawn mower, wherein the control device, during the drive of the lawn mower, stops the drive of the lawn mower when the operation of the parking brake is instructed, and during stop control of the lawn mower, drives the lawn mower when the operation of the parking brake is not instructed.

### BRIEF DESCRIPTION OF THE DRAWINGS

FIG. 1 is a perspective view of a lawn mowing vehicle equipped with a control system according to an embodiment according to the present disclosure;
FIG. 2 is a schematic configuration diagram of the vehicle of FIG. 1;
FIG. 3 is a diagram illustrating a right operation lever and an operation element group in the vehicle of FIG. 1;
FIG. 4 is a block diagram illustrating the control system of the lawn mowing vehicle of the embodiment;
FIG. 5 is a schematic diagram illustrating a state of straight travel in the vehicle of FIG. 1;
FIG. 6A is a schematic view illustrating a state of a left-turn to the front side in the vehicle of FIG. 1;
FIG. 6B is a schematic view illustrating a state in which the vehicle of FIG. 1 turns around one of two left and right wheels;
FIG. 6C is a schematic view illustrating a state in which the vehicle of FIG. 1 makes a quick turn around the center between the two left and right wheels;
FIG. 7 is a flowchart illustrating a control method when a lawn mowing drive motor is automatically rotated and stopped in the embodiment;
FIG. 8 is a schematic configuration diagram of a lawn mowing vehicle equipped with a control system of another example of the embodiment according to the present disclosure;
FIG. 9 is a block diagram illustrating the control system of the lawn mowing vehicle according to another example of the embodiment;
FIG. 10 is a flowchart illustrating a control method when the lawn mowing drive motor is automatically rotated and stopped in another example of the embodiment; and
FIG. 11 is a flowchart illustrating a control method when the lawn mowing drive motor is automatically rotated and stopped in another example of the embodiment.

### DESCRIPTION OF EXEMPLARY EMBODIMENTS

Hereinafter, embodiments according to the present disclosure will be described in detail with reference to the drawings. The shape, number, arrangement of parts, etc. described below are examples for explanation, and can be appropriately changed according to the specifications, etc. of a control system of a lawn mowing vehicle. Further, in the following, similar elements are designated by the same reference numerals in all drawings, and duplicate description will be omitted or simplified.

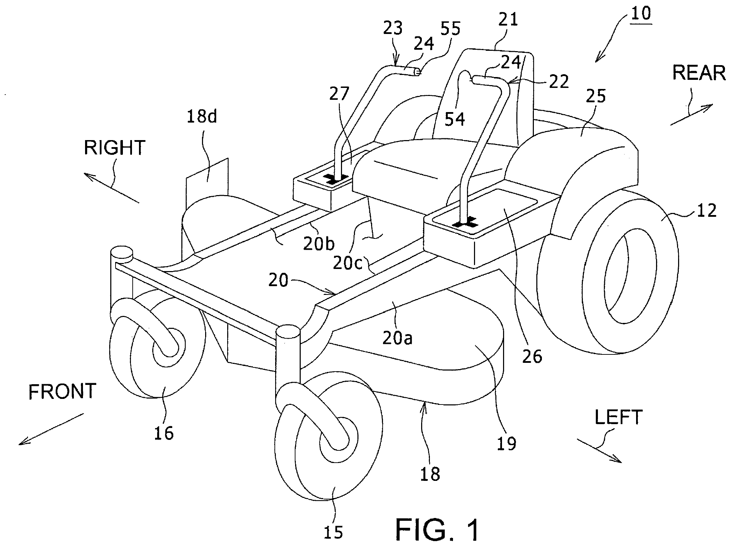

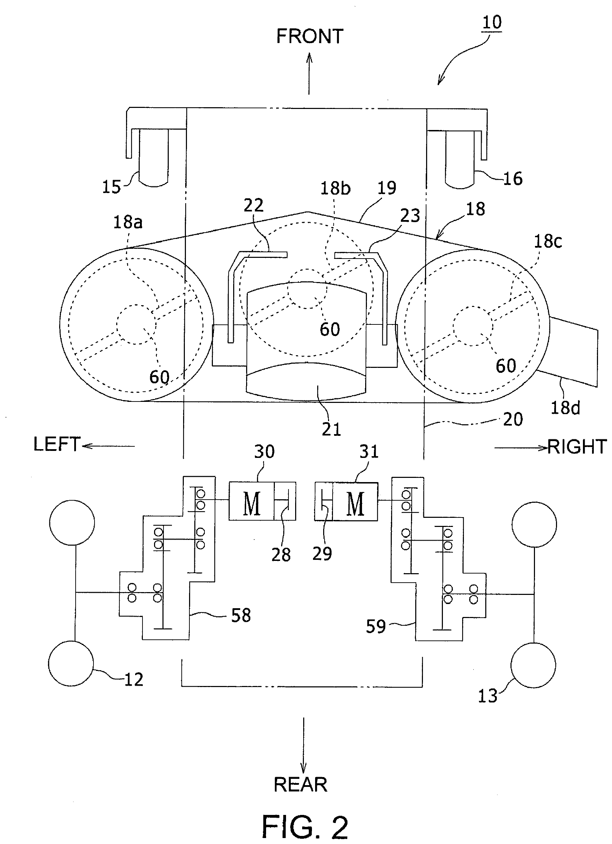

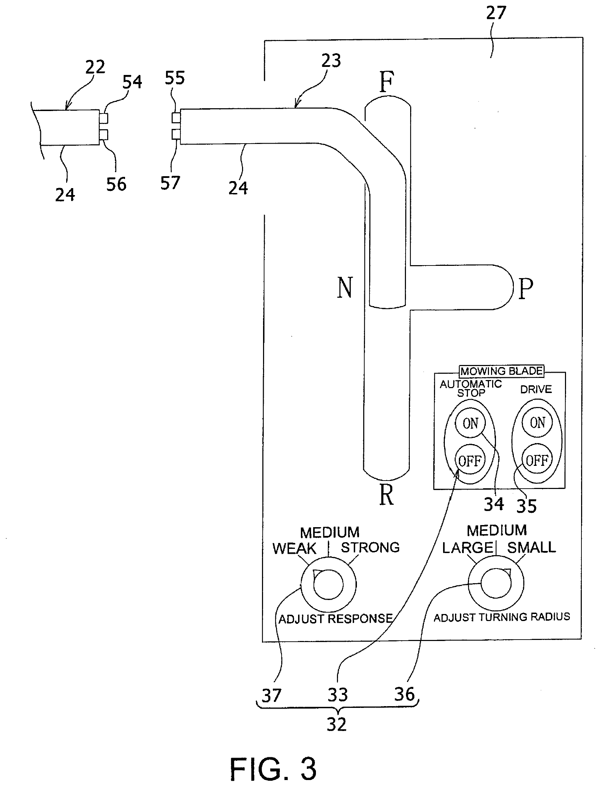

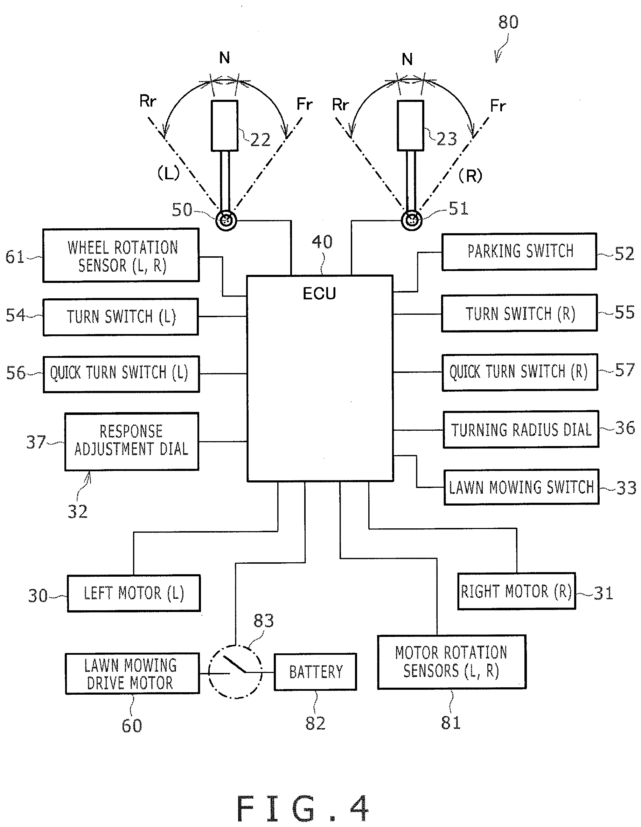

FIG. 1 to FIG. 7 show a control system 80 (FIG. 4) of a lawn mowing vehicle 10 according to the embodiment. In the following, the lawn mowing vehicle 10 will be referred to as a vehicle 10. FIG. 1 is a perspective view of the vehicle 10 equipped with the control system 80 of the embodiment. FIG. 2 is a schematic configuration diagram of the vehicle 10. FIG. 3 is a diagram illustrating a right operation lever 23 and an operation element group 32 in the vehicle 10. In the configurations of FIG. 1 to FIG. 7, the case where left and right wheels 12 and 13 are arranged on the rear side and caster wheels 15 and 16 are arranged on the front side will be described, but the left and right wheels may be on the front side and the caster wheels may be on the rear side.

The vehicle 10 is a self-propelled off-road vehicle appropriate for mowing. The vehicle 10 includes two wheels on the left and right sides, that is, the left wheel 12 and the right wheel 13 (FIG. 2), the caster wheels 15 and 16, a lawn mower 18, a left motor 30 and a right motor 31 (FIG. 2), two operation levers on the left and right sides, that is, left and right operation levers 22 and 23, and an ECU 40 (FIG. 4) which is a control device. The left motor 30 and the right motor 31 are each an example of a continuously variable transmission, and an electric motor. The wheels 12 and 13 are drivingly connected to the electric motors 30 and 31, independently driven respectively by the electric motors 30 and 31

The left wheel 12 and the right wheel 13 are rear wheels supported on respective left and right sides on the rear side of the main frame 20 which is a vehicle body, and are main drive wheels. The main frame 20 is a metal such as a steel material formed into a beam structure or the like. The main frame 20 includes side plate portions 20a and 20b extending substantially in the front-rear direction at both left and right ends, and a connecting portion 20c connecting the left and right side plate portions 20a and 20b. A driver seat 21 on which a driver sits is fixed on the upper side between the rear end portions of the left and right side plate portions 20a and 20b.

In the main frame 20, two guide panels 26 and 27 are fixed on the respective left and right sides of the driver seat 21, and supported by the main frame 20 such that the left and right operation levers 22 and 23 protrude upward from the respective two guide panels 26 and 27. The left operation lever 22 corresponds to an acceleration instruction unit that instructs the acceleration of the left motor 30, and the right operation lever 23 corresponds to an acceleration instruction unit that instructs the acceleration of the right motor 31. Tip end portions of the left and right operation levers 22 and 23 are grasped and used by the driver to indicate the rotational direction and rotational speed of the left wheel 12 and the right wheel 13. The left operation lever 22 is operated to instruct the drive and acceleration of the left wheel 12 by changing the instruction of the rotational speed of the left wheel 12 so that the rotational speed becomes high. The right operation lever 23 is operated to instruct the drive and acceleration of the right wheel 13 by changing the instruction of the rotational speed of the right wheel 13 so that the rotational speed becomes high. Each of the operation levers 22 and 23 is substantially L-shaped, and at the upper end portion thereof, a grip portion 24 extending in the left-right direction is formed. The grip portion 24 is gripped and operated by the driver. Each of the operation levers 22 and 23, at the lower end portion thereof, can swing around an axis along the left-right direction. As shown in FIG. 3, the operation levers 22 and 23, when being tilted, based on an N position which is a neutral position close to the upright position, in the F direction that corresponds to the forward movement, issue an instruction to drive the motor 30 (or 31) on the same side as the operation lever 22 (or 23) at the target revolution speed (min⁻¹) per unit time, as the target rotational speed that corresponds to the forward movement. A greater tilt amount of the operation levers 22 and 23 denotes that the target revolution speed is higher. On the other hand, the operation levers 22 and 23, when being tilted, based on the N position, in the R direction that corresponds to the reverse movement, issue an instruction to drive the motor 30 (or 31) on the same side as the operation lever 22 (or 23) at the target revolution speed that corresponds to the backward movement. A greater tilt amount of the operation levers 22 and 23 denotes that the target revolution speed is higher.

When one or both operation levers 22 and 23 are in the N position, it is instructed to set the target revolution speed of one of the motors 30 and 31 on the same side as the one operation lever 22 (or 23), or both of the motors 30 and 31, to zero (0). With this, when the vehicle 10 is on a slope and the two left and right operation levers 22 and 23 are in the N position, the motors 30 and 31 maintain the revolution speed at zero (0), so that the vehicle 10 can be prevented from sliding down. Further, the N positions of the operation levers 22 and 23 may be defined not by one point but also, as shown in the range of an arrow N in FIG. 4, by a predetermined range until the operation levers 22 and 23 fall at a predetermined angle in the front-rear direction with the upright position as the center. For example, when the operation levers 22 and 23 are in this predetermined range, it is instructed that the target revolution speeds of the corresponding motors 30 and 31 are zero (0). Further, when the operation levers 22 and 23 are in the N position or in the predetermined range centered on the N position, it may be so configured that the driving force is not generated in the motors 30 and 31 that correspond to the operation levers 22 and 23. For example, when the two operation levers 22 and 23 are in the N position or in the predetermined range centered on the N position, the generation of the driving force of the two motors 30 and 31 may be stopped.

When the left and right operation levers 22 and 23 are in a P position, below-described electromagnetic brakes 28 and 29 (FIG. 2) built into respective motors 30 and 31 are activated to stop the rotation of the motors 30 and 31. The electromagnetic brakes 28 and 29 correspond to parking brake devices. When the operation is instructed by moving the operation levers 22 and 23 to the P position, the electromagnetic brakes 28 and 29 brake the motors 30 and 31. It may be so configured that a member constituting the power transmission path between the motors 30 and 31 and the wheels 12 and 13 when the operation levers 22 and 23 are in the P position, for example, a gear constituting a reduction device, is braked by being mechanically stopped by the parking brake device, or the wheels 12 and 13 are braked by the operation of a disc brake as a parking brake provided on the wheel. The above member constituting the power transmission path is a member to which power is transmitted from the motors 30 and 31.

The swing positions of the two left and right operation levers 22 and 23 between the F position and the R position are detected by lever position sensors 50 and 51 (FIG. 4), respectively. Lever position sensors 50, 51 include, for example, potentiometers. The two lever position sensors 50 and 51 correspond to neutral sensors detect that the two left and right operation levers 22 and 23 are in the N positions (FIG. 3) to set the target revolution speeds of the left motor 30 and the right motor 31 to zero (0), or to stop the generation of the driving force of the left motor 30 and the right motor 31. A parking switch 52 detects that the left and right operation levers 22 and 23 are in the P position. The detection signals of the lever position sensors 50 and 51 and the detection signal of the parking switch 52 are transmitted to the ECU 40.

Further, as shown in FIG. 3, turn switches 54 and 55 are provided on the two left and right operation levers 22 and 23, respectively, as turn operation tools. The two left and right turn switches 54 and 55 are used to issue an instruction to turn the vehicle 10 to the side of the one turn switch 54 (or 55) having been operated. Each turn switch 54 (or 55) is a push button type protruding from the tip end surface of the grip portion 24 of the operation levers 22 and 23.

The turn switches 54 and 55 are, for example, momentary switches connected to the ECU 40 by a signal line, and continue to output a turn instruction signal to the ECU 40 only when being pressed by the driver. When the turn switches 54 and 55 are not pressed down, the turn switches 54 and 55 do not output the turn instruction signal to the ECU 40. When the turn instruction signal is transmitted, the ECU 40 changes the target revolution speed (min⁻¹) per unit time as the target rotational speeds of the left and right motors 30 and 31 so that the vehicle 10 is turned to the side of the turn switch 54 (or 55) that transmitted the turn instruction signal. With this, as will be described below, without changing the operation amount of the two left and right operation levers 22 and 23, merely operating the turn switch 54 (or 55) provided on the one operation lever 22 (or 23) can turn the vehicle 10 to the side of that turn switch 54 (or 55). Therefore, the frequency with which the driver significantly moves their arm during driving can be reduced, so that fatigue of the driver's arm can be reduced.

Further, on the tip end surfaces of the respective grip portions 24 of the two left and right operation levers 22 and 23, along with the turn switches 54 and 55, quick turn switches 56 and 57 are provided as quick turn operation tools. The quick turn switches 56 and 57 are used to issue an instruction to quickly turn the vehicle 10 to the side of the operated quick turn switch 56 (or 57) with the center position between the grounding positions of the left wheel 12 and the right wheel 13 as a turn center. In this case, the "quick turn" is called a zero turn, or a super-spin turn. Just as the turn switches 54 and 55, the quick turn switches 56 and 57 are press-button type protruding from the tip end surfaces of the grip portions 24 of the operation levers 22 and 23. The quick turn switches 56 and 57 are, for example, momentary switches connected to the ECU 40 by a signal line, and continue to output a quick turn instruction signal to the ECU 40 only when being pressed by the driver. When the quick turn switches 56 and 57 are not pressed down, the quick turn switches 56 and 57 do not output the quick turn instruction signal to the ECU 40.

The left wheel 12 and the right wheel 13 protrude outward from the lateral outer ends of the side plate portions 20a and 20b of the main frame 20. At least a part of the upper side of each of the wheels 12 and 13 is covered with a wheel cover 25, and the wheel covers 25 are fixed to the side plate portions 20a and 20b. The wheel covers 25 and the guide panels 26 and 27, though being fixed to the main frame 20 in a state of being integrated, may be fixed to the main frame 20 in a state of being separated from each other.

The two left and right caster wheels 15 and 16 are steering wheels supported by a front end portion of the main frame 20 and are front wheels. The respective caster wheels 15 and 16 are provided apart from the left wheel 12 and the right wheel 13 in the front-rear direction of the vehicle 10. Each of the caster wheels 15 and 16 can freely rotate through 360 degrees or more about an axis in the vertical direction (vertical direction in FIG. 1). The caster wheels are not limited to the configuration in which two caster wheels are arranged in the vehicle, and only one caster wheel, or three or more caster wheels, may be arranged in the vehicle.

As shown in FIG. 2, the left motor 30 is connected to the left wheel 12 via a left reduction gear device 58 supported on the rear side of the main frame 20. The right motor 31 is connected to the right wheel 13 via a right reduction gear device 59 supported on the rear side of the main frame 20. The left motor 30 and the right motor 31 are travel motors, respectively, and are supported on the left side and the right side on the rear side of the main frame 20, respectively. Power is supplied to the left motor 30 and the right motor 31 from a battery 82 (FIG. 4). The left motor 30 and the right motor 31 are independently controlled in terms of rotational direction and rotational speed by an ECU which is a control device described below. The left motor 30 and the right motor 31 are, for example, three-phase motors, and are connected to the battery 82 via an inverter (not shown) connected to each of the left motor 30 and the right motor 31. The ECU 40 controls the drive of each of the left and right motors 30 and 31 by controlling the inverters corresponding to the respective left and right motors 30 and 31. With this, the left motor 30 and the right motor 31 independently drive the left wheel 12 and the right wheel 13 in terms of the rotational direction and the rotational speed. The left motor 30 and the right motor 31 respectively have the built-in electromagnetic brakes 28 and 29, and the electromagnetic brakes 28 and 29 are controlled by the ECU 40 (FIG. 4) described below. When the two left and right operation levers 22 and 23 are moved to the parking position P (FIG. 3), the movements thereof are detected by the two left and right parking switches 52. The detection signal of the parking switch 52 is transmitted to the ECU 40. The parking switch 52 corresponds to a parking brake instruction sensor that detects that the operation of the parking brakes such as the electromagnetic brakes 28 and 29 has been instructed. The ECU 40 operates the electromagnetic brakes 28 and 29 built into the left and right motors 30 and 31 in response to the two left and right parking switches 52 being turned on, and stops the respective motors 30 and 31. The electromagnetic brakes 28 and 29 are operated by being supplied with electric power from the battery 82. Various structures such as a friction type using a friction plate and a meshing type using a meshing plate can be adopted for the electromagnetic brakes 28 and 29.

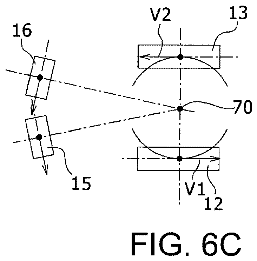

As will be described below, the two left and right wheels 12 and 13 rotate in opposite directions at the same speed, so that the vehicle 10 can make a quick turn around a turn center position 70 (FIG. 6C) located between the left wheel 12 and the right wheel 13.

As shown in FIGS. 1 and 2, the lawn mower 18 is supported below the intermediate portion in the longitudinal direction of the main frame 20. The lawn mower 18 is arranged between the caster wheels 15 and 16 and the left and right wheels 12 and 13 in the front-rear direction. The lawn mower 18 includes three lawn mower blades 18a, 18b, 18c (FIG. 2) which are lawn mower rotary tools arranged inside a mower deck 19 as a cover. Upper sides of the lawn mower blades 18a, 18b, 18c are covered with the mower deck 19. Each of the lawn mower blades 18a, 18b, 18c has a plurality of blade elements that rotate around an axis oriented in the vertical direction (front and back directions of the paper surface of FIG. 2). With this, the blade element rotates to cut the grass and can mow the grass. Each of the lawn mower blades 18a, 18b, and 18c is rotationally driven by a lawn mowing drive motor 60 (FIG. 4) controlled by the ECU 40 (FIG. 4) described below. The lawn mowing drive motor 60 is, for example, a DC motor. As shown in FIG. 4 described below, the lawn mowing drive motor 60 and the battery 82 are connected via a relay switch 83. The ECU 40 controls the opening and closing of the relay switch 83 to thereby make a switch between drive and stop of the lawn mowing drive motor 60. The mowed grass is discharged to one side of the vehicle 10 in the left-right direction through a discharge duct 18d provided on one side of the mower deck 19 in the left-right direction.

The left and right end portions of the mower deck 19 respectively protrude outward from the left and right ends in the middle portions in the front-rear direction of the left and right side plate portions 20a and 20b (FIG. 1) constituting the main frame 20.

FIG. 4 is a block diagram illustrating the control system 80 of the vehicle 10 of the embodiment. With reference to FIG. 3 and FIG. 4, the operation element group 32 is arranged on the rear side (lower side of FIG. 3) of the guide panel 27 that guides the operation lever 23 on the right side. The operation element group 32 includes a lawn mowing switch 33, a turn radius dial 36, and a response adjustment dial 37. The lawn mowing switch 33 has an automatic stop changeover switch 34 and a drive changeover switch 35. The automatic stop changeover switch 34 can be selectively switched between an on switch and an off switch, and only ON or OFF function of the last pressing-down operation of the switch is effective. The automatic stop changeover switch 34 is connected to the ECU 40 (FIG. 4) by a signal line. The control system 80 includes the left motor 30, the right motor 31, the two left and right wheel rotation sensors 61, the two left and right motor rotation sensors 81, the two left and right operation levers 22 and 23, the two left and right lever position sensors 50, 51, the parking switch 52, the lawn mower 18, and the ECU 40. The wheel rotation sensor 61 and the motor rotation sensor 81 correspond to revolution speed detection units, respectively. The two left and right wheel rotation sensors 61 detect the respective revolution speeds of the two left and right wheels 12 and 13. The two left and right motor rotation sensors 81 detect the respective revolution speeds of the two left and right motors 30 and 31. Each of the left and right motors 30 and 31 is an example of a rotation member in the power transmission path from the corresponding motors 30 and 31 to the corresponding two left and right wheels 12 and 13.

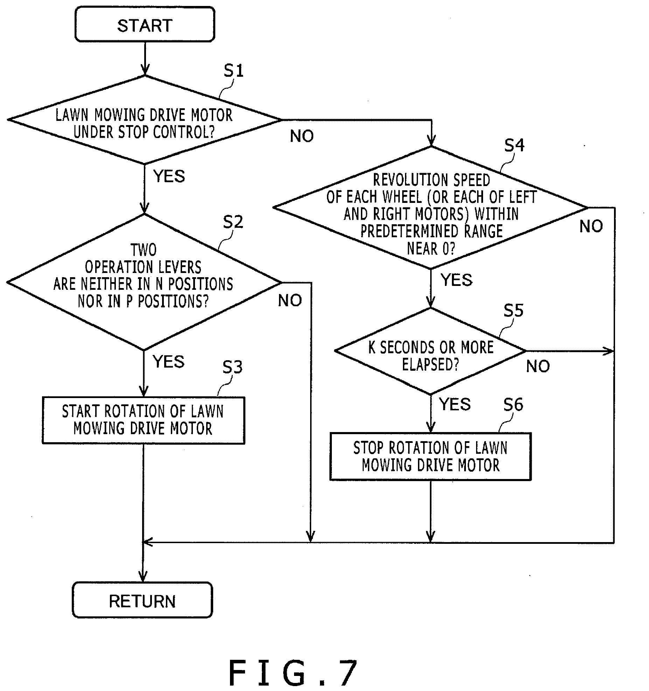

When the automatic stop changeover switch 34 is turned on, the ECU 40, during the drive of the lawn mower 18, stops the drive of the lawn mower 18 after the revolution speed of each of the left wheel 12 and the right wheel 13 is within the predetermined range near 0 which will be described below. Further, when the automatic stop changeover switch 34 is turned on, the ECU 40, during the stop control of the lawn mower 18, drives the lawn mower 18 when each of the two left and right operation levers 22 and 23 is neither in the N position nor in the P position, that is, when the operation of the parking brakes such as the electromagnetic brakes 28 and 29 is not instructed. With this, as will be described below, the drive of the lawn mower 18 is automatically stopped at the time of stop or substantial stop of travel of the vehicle 10, and the drive of the lawn mower 18 is automatically restarted at the time of restart of travel of the vehicle 10. Therefore, without requiring a great deal of time and effort by the driver, it is possible to suppress any wasteful power consumption in the battery 82 that supplies power to the lawn mowing drive motor 60 for driving the lawn mower 18. Therefore, the workable time of mowing can be extended. A control method in the case of automatically rotating and stopping the lawn mowing drive motor 60 of the lawn mower 18 will be described below with reference to FIG. 7.

Similarly to the automatic stop changeover switch 34, the drive changeover switch 35 can be selectively switched between an on switch and an off switch. The drive changeover switch 35 is also connected to the ECU 40 by a signal line. When the drive changeover switch 35 is turned on, the lawn mower 18 is driven under the control of the driver regardless of the positions of the left and right operation levers 22 and 23. When the drive changeover switch 35 is turned off, the lawn mower 18 is stopped at the driver's command. With this, the driver can arbitrarily switch the drive and stop of the lawn mower 18 by using the drive changeover switch 35.

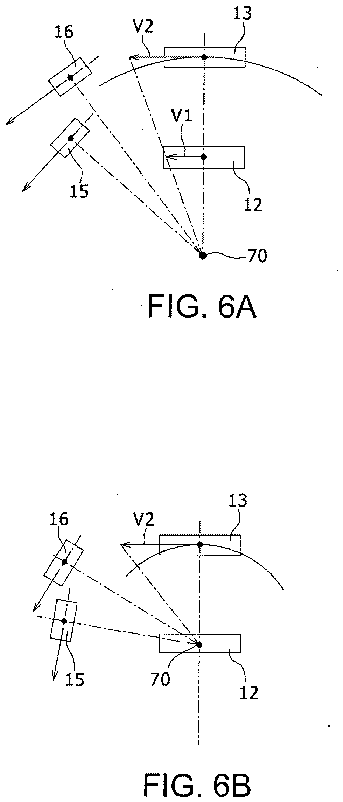

The turn radius dial 36 is a turn radius adjuster that can be operated by the driver, and is configured so that any one of three positions of "Large", "Medium", and "Small" can be selected by rotating the dial. "Large", "Medium", and "Small" indicate the size of the turn radius that is acquired when the turn switches 54 and 55 are operated, where the selection of "Large" indicates that the turn radius is the largest, the selection of "Small" indicates that the turn radius is the smallest, and the selection of "Medium" indicates that the turn radius is in the middle between "Large" and "Small". In addition, in this specification, the "turn radius" indicates the distance from the turn center position 70 (FIG. 6A to FIG. 6C) on a ground center line, which is a straight line connecting the center positions of the two left and right wheels 12 and 13 in the front-rear direction, to the same position in the left-right direction as the outermost end of the rotation trajectory of a lawn mower blade on the outer side of the turn on the ground center line.

The turn radius dial 36 detects the switchover of the three positions by the switchover of contacts or the like, and transmits the detection signal to the ECU 40. The ECU 40 sets the target turn radius according to the detection signal from the turn radius dial 36. With this, according to the operation position of the turn radius dial 36, the ECU 40 changes, among the three preset turning radii, the target turn radius that is acquired when the turn switches 54 and 55 (FIG. 3) are operated. Based on the current revolution speeds of the two left and right motors 30 and 31 set by the target turn radius and the two operation levers 22 and 23, or based on the revolution speeds of the left and right wheels 12 and 13, the ECU 40 calculates the target revolution speed of each of the two left and right motors 30 and 31. The ECU 40 controls the motors 30 and 31 via an inverter (not shown) so as to drive the motors 30 and 31 at the calculated target revolution speeds. The turn radius dial 36 may be switchable so that the size can be selected at two positions or four or more positions.

As shown in FIG. 4, the detection values of the revolution speeds of the two left and right wheels 12 and 13 are input to the ECU 40 from the left and right wheel rotation sensors 61. Further, the detection values of the revolution speeds of the left and right motors 30 and 31 are input to the ECU 40 from the left and right motor rotation sensors 81.

As shown in FIG. 3, the response adjustment dial 37 is an acceleration/deceleration adjuster that can be operated by the driver, and is configured to be able to select any one of the three positions of "Weak", "Medium", and "Strong", by rotation of the dial. "Weak", "Medium", and "Strong" indicate the level of responsiveness that is acquired when at least one of the operation levers 22 and 23, the turn switches 54, 55, and the quick turn switches 56, 57 is operated and when at least one of the two left and right motors 30, 31 respectively shift to the target revolution speed per unit time as the target rotational speed. Selection of "Weak" indicates the lowest responsiveness, selection of "Strong" selection indicates the highest responsiveness, and selection of "Medium" indicates the middle responsiveness between "Weak" and "Strong". The response adjustment dial 37 detects the switchover of the three positions by switchover of contacts or the like, and transmits the detection signal to the ECU 40. According to the detection signal from the response adjustment dial 37, the ECU 40 sets responsiveness of the two left and right motors 30 and 31 at the time of shifting to the target revolution speeds. With this, according to the operation position of the response adjustment dial 37, the ECU 40 changes the responsiveness for the two left and right motors 30 and 31 among the three preset responsiveness levels.

When shifting to respective target revolution speeds of the two left and right motors 30 and 31 set according to the operation of at least one pair of the operation levers 22 and 23, the turn switches 54 and 55, and the quick turn switches 56 and 57, the ECU 40 makes a shift from the current rotational speeds to the target revolution speeds with the set responsiveness. For example, the ECU 40 sets the target revolution speeds of the two left and right motors 30 and 31 according to the operation positions of the two operation levers 22 and 23.

More specifically, the ECU 40 (FIG. 4) includes a calculation unit such as a CPU and a storage unit such as a memory, and is composed of, for example, a microcomputer. The ECU 40 acquires the operation positions of the two operation levers 22 and 23 from the detection signals of the two left and right lever position sensors 50 and 51, and sets the respective target revolution speeds of the left motor 30 and the right motor 31 according to the operation positions of the respective operation levers 22 and 23.

Further, when the response adjustment dial 37 is operated and at least one of the two operation levers 22 and 23 is operated, the ECU 40 changes the responsiveness in shifting from the current rotational speed of the left motor 30 or the right motor 31 corresponding to the operated operation levers 22 and 23 to the target rotational speed, according to the operation of the response adjustment dial 37. Thus, for example, during control for setting the target revolution speed, when the ECU 40 gradually shifts the motors 30 and 31 to the target revolution speed by filtering, the ECU 40 performs the processing based on a filtered responsiveness. For example, a gain employed when feedback control is performed so that the revolution speed of the motors 30 and 31 approaches the target revolution speed by filtering according to the detection value of the current revolution speed of the motors 30 and 31 is changed based on the set responsiveness. For example, when "Strong" is set, the gain is set to the largest gain among three predetermined gains, when "Weak" is set, the gain is set to the smallest gain among the three predetermined gains, and when "Medium" is set, the gain is set to an intermediate gain between "Strong" and "Weak".

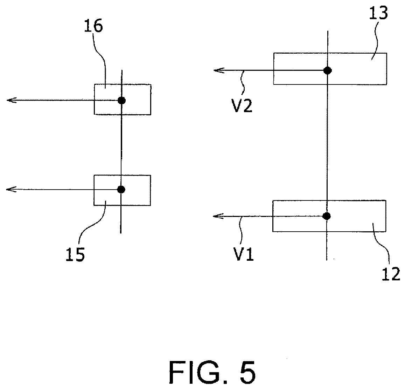

FIG. 5 is a schematic view illustrating a state of straight travel of the vehicle 10. FIG. 5 illustrates the positional relation between the left and right wheels 12 and 13 and the caster wheels 15 and 16. As shown in FIG. 5, the vehicle 10 can travel straight by matching the rotational speeds of the left and right wheels 12 and 13 by means of the left and right motors 30 and 31 (FIG. 2). At this time, ground movement speeds V1 and V2, which are the movement speeds of the left and right wheels 12 and 13 at the ground contact position with respect to the ground, are the same. A power source is not connected to the left and right caster wheels 15 and 16, and the caster wheels 15 and 16 are subordinately rotated from the ground as the vehicle 10 travels driven by the left and right wheels 12 and 13. On the other hand, generating a difference in rotational speed between the left and right wheels 12 and 13 allows the vehicle 10 to make a turn.

FIG. 6A, FIG. 6B, and FIG. 6C show three examples of turning of the vehicle. Similar to FIG. 5, FIG. 6A, FIG. 6B, and FIG. 6C also illustrate the positional relations between the left and right wheels 12 and 13 and the caster wheels 15 and 16. FIG. 6A is a schematic view illustrating a state of turning to the front side in the vehicle 10. In FIG. 6A, when viewed from above, the turn center position 70 is outside the left wheel 12 on the extension line in the axle shaft direction of the left and right wheels 12 and 13. At this time, the vehicle 10 turns relatively gently.

FIG. 6B is a schematic view illustrating a state in which the vehicle 10 turns around the wheel 12 which is one of the left and right wheels 12 and 13. In FIG. 6B, the turn center position 70 is located at the ground contact position with respect to the ground of the wheel 12. Such a turn is called a spin turn, and the vehicle 10 turns sharper than in the case of FIG. 6A.

FIG. 6C is a schematic view illustrating a state in which the vehicle 10 turns around the center between the left and right wheels 12 and 13. In FIG. 6C, when viewed from above, the turn center position 70 is located in the center position between the left and right wheels 12 and 13 on the extension line in the axle shaft direction of the left and right wheels 12 and 13. Further, absolute values of the ground movement speeds V1 and V2 of the left and right wheels 12 and 13 are the same, but the direction of the ground movement speed V1 of the wheel 12 is opposite to the direction of the ground movement speed V2 of the other wheel 13. In this case, the vehicle 10 turns even sharper than in the case of FIG. 6B. Such a turn is called a super-spin turn, a spin turn, or a zero turn (ZTR) because the turn radius is zero.

The ECU 40 sets the target revolution speeds of the two left and right motors 31 and 32 according to the operation positions of the two left and right operation levers 22 and 23, thereby making it possible to execute the straight travel in FIG. 5 and the turning in FIG. 6A, FIG. 6B, and FIG. 6C.

Further, when one of the two left and right turn switches 54 and 55 is operated, the ECU 40 controls the left motor 30 and the right motor 31 so that the vehicle 10 is turned to the side of the operated turn switch. At this time, the ECU 40 sets the respective target revolution speeds of the left motor 30 and the right motor 31 so as to turn the vehicle 10 at the target turn radius set by the turn radius dial 36.

Further, when one of the two left and right quick turn switches 56 and 57 (FIG. 3) is operated, the ECU 40 controls the left motor 30 and the right motor 31 so as to turn the vehicle 10 to the side of the operated quick turn switch 56 or 57. At this time, the ECU 40 controls the left motor 30 and the right motor 31 so that the vehicle 10 makes a quick turn, with the center position between the at the ground contact positions with respect to the ground of the left wheel 12 and the right wheel 13 as the turn center position 70 (FIG. 6C). At this time, the ECU 40 rotates the left motor 30 and the right motor 31 in opposite directions at the same speed so that the left wheel 12 and the right wheel 13 rotate in opposite directions at the same speed. For example, as shown in FIG. 6C, the ECU 40 rotates the left wheel in the backward direction at the ground movement speed V1 and rotates the right wheel in the forward direction at the ground movement speed V2 having the same magnitude as that of the ground movement speed VI, thus quickly turning the vehicle 10 to the left side with the zero turn.

FIG. 7 is a flowchart illustrating a control method when the lawn mowing drive motor 60 is automatically rotated and stopped. In step S1 of FIG. 7, the ECU 40 determines whether or not the lawn mowing drive motor 60 is under stop control, that is, whether or not the lawn mower 18 is under stop control. When the determination in step S1 is positive (YES), in step S2, the ECU 40 determines whether or not the left and right operation levers 22 and 23 are neither in the P position nor in the N position, that is, whether or not instruction for the operation of the parking brake is not issued. At this time, it can be deemed that the state in which each of the left and right operation levers 22 and 23 is not in the N position corresponds to the state in which the target revolution speed of each of the left motor 30 and the right motor 31 is not 0. When the determination in step S2 is positive (YES), in step S3, the ECU 40 starts the rotation of the lawn mowing drive motor 60, that is, starts the rotation of the lawn mower 18, and the processing returns to step S1.

On the other hand, when the determination in step S2 is negative (NO), the ECU 40 maintains the state in which the lawn mowing drive motor 60 is under stop control, and the processing returns to step S1.

When the determination in step S1 is negative (NO), that is, when the lawn mower 18 is being driven, in step S4, the ECU 40 determines whether or not the revolution speed of each of the wheel 12 and the wheel 13 is within the predetermined range near zero (0) in accordance the detection signal from each of the wheel rotation sensors 61. The predetermined range near 0 is either 0 or a predetermined rotational speed greater than 0 set in advance, for example, a revolution speed corresponding to a vehicle speed 0.1 km/h. When the determination in step S4 is positive (YES), in step S5, the ECU 40 determines whether or not K seconds or more, for example, several seconds or more less than 10 seconds, as a predetermined time, have elapsed from the time point when the revolution speed of each of the wheels 12 and 13 becomes within the predetermined range near 0. When the determination in step S5 is positive (YES), in step S6, the ECU 40 stops the rotation of the lawn mowing drive motor 60, that is, stops the rotation of the lawn mower 18, and the processing returns to step S1.

On the other hand, when the determination in step S4 is negative (NO) and when the determination in step S5 is negative (NO), the rotating state of the lawn mowing drive motor 60 is maintained, and the processing returns to step S1.

According to the control system 80 of the vehicle 10, the rotation and stop of the lawn mowing drive motor 60 are automatically switched by the ECU 40, as described above. With this, the drive of the lawn mower 18 is automatically stopped when the travel of the vehicle 10 is stopped, and the drive of the lawn mower 18 is automatically restarted when the travel of the vehicle is restarted. Therefore, any wasteful power consumption of the battery 82 is suppressed without requiring a large amount of time and effort by the driver to manually switch the drive changeover switch 35 of the lawn mower 18 according to whether the travel of the vehicle 10 is stopped or restarted. With this, the workable time for mowing can be extended.

In the above, the description has been given of the case in which, in step S4 of FIG. 7, the ECU 40 switches the operation between moving to step S5 and returning to step S1, depending on whether or not the revolution speed of each of the wheels 12 and 13 is within the predetermined range near zero (0). On the other hand, in step S4, the ECU 40 may switch the operation between moving to step S5 and returning to step S1, depending on whether the revolution speed of each of the wheels 12 and 13 is zero (0) or not. Alternatively, in step S4, the ECU 40 may determine, according to the detection signal from each of the motor rotation sensors 81, whether or not the revolution speed of each of the left motor 30 and the right motor 31 is within the predetermined range near zero (0), or is zero (0). In this case as well, similarly to the above, when the determination in step S4 is positive (YES), the processing moves to step S5, and when the determination in step S4 is negative (NO), the rotating state of the lawn mowing drive motor 60 is maintained, and the processing returns to step S1. As a result, during the drive of the lawn mower 18, the ECU 40 stops the drive of the lawn mower 18 after the revolution speeds of the left motor 30 and the right motor 31 are zero (0) or within the predetermined range near zero (0). Instead of each of the motor rotation sensors 81, by using a rotation sensor that detects the revolution speed of a rotation member, for example, a gear, other than the motors 30 and 31, in the power transmission path from the motors 30 and 31 to the wheels 12 and 13, the ECU 40 may calculate the revolution speeds of the motors 30 and 31 from the detection value of the respective rotation sensors.

Further, in this example, during the drive of the lawn mower 18, the ECU 40 stops the lawn mower 18 after an elapse of the predetermined time from the time point when the revolution speed of each of the two wheels 12 and 13 or the revolution speed of each of the left motor 30 and the right motor 31 is zero (0), or within the predetermined range near zero (0). As a result, it is possible to prevent the lawn mower 18 from being stopped during the pause when the driver pauses the vehicle 10 for only a short time and immediately restarts the travel of the vehicle 10, so that frequent short pauses of the lawn mower 18 can be suppressed.

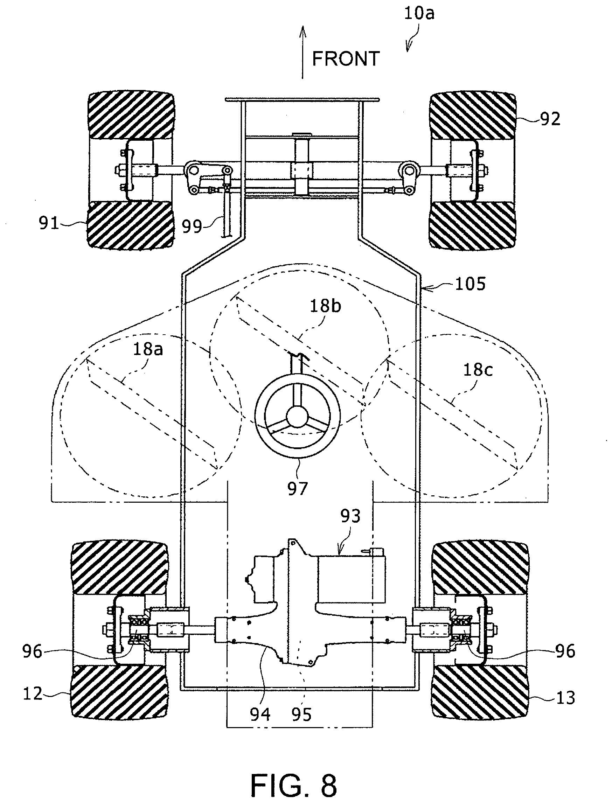

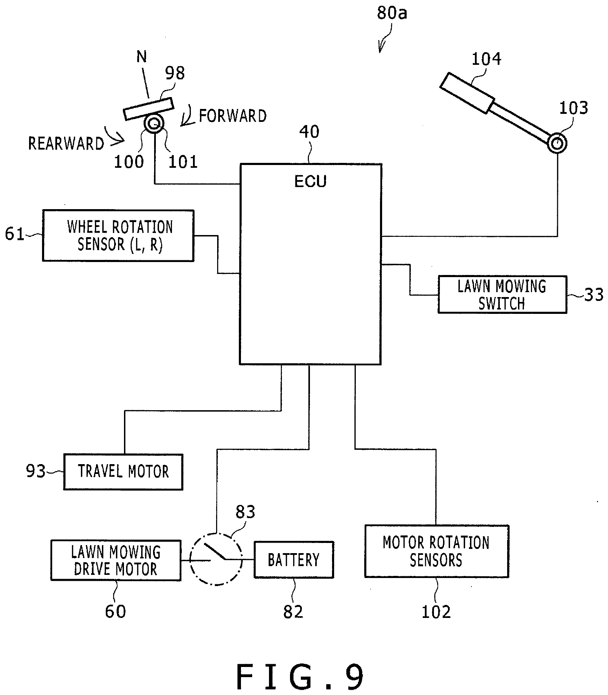

FIG. 8 is a schematic configuration diagram of a lawn mowing vehicle 10a equipped with a control system 80a (FIG. 9) of another example of the embodiment according to the present disclosure. FIG. 9 is a block diagram illustrating the control system 80a of the lawn mowing vehicle 10a.

In the case of this example, the lawn mowing vehicle 10a has two main driving wheels, that is, the left wheel 12 and the right wheel 13 supported on the rear side of the main frame 105, and two driven wheels, that is, a left wheel 91 and a right wheel 92 supported on the front side. Hereinafter, the lawn mowing vehicle 10a will be referred to as a vehicle 10a. One travel motor 93 is connected to the two left and right wheels 12 and 13 on the rear side via a power transmission mechanism 95 housed in a rear side case 94. The power transmission mechanism 95 includes a gear mechanism and a differential mechanism, and the wheels 12 and 13 are connected to respective sides of the differential mechanism in the left-right direction (left-right direction in FIG. 8) via a wheel axis 96. The travel motor 93 is an example of a continuously variable transmission and is an electric motor. Further, the travel motor 93 is an example of a rotation member in the power transmission path from the travel motor 93 to the wheels 12 and 13.

In the vehicle 10a, a steering wheel 97, which is a turn operation tool, and an accelerator pedal 98 (FIG. 9) are arranged on the front side of the driver seat 21 (see FIG. 1). By operation of the steering wheel 97, the left and right wheels 91 and 92 on the front side are steered via a steering mechanism 99 on the front side of the vehicle 10a. A conventionally known structure such as the Ackermann system is used for the steering mechanism 99.

The accelerator pedal 98 corresponds to an acceleration instruction unit that instructs the acceleration of the travel motor 93. As shown in FIG. 9, the accelerator pedal 98 is supported by a main frame 105 so as to be swingable around an axis 100 in the left-right direction. When the driver steps on the front end portion (right end portion in FIG. 9) of the accelerator pedal 98, the travel motor 93 accelerates in the forward direction. When the driver steps on the rear end portion of the accelerator pedal 98 (left end portion of FIG. 9), the travel motor 93 accelerates in the reverse direction. When the accelerator pedal 98 is positioned at the N position, which is the neutral position when not operated, it is instructed to set the target revolution speed of the travel motor 93 to zero (0) or to stop the generation of the driving force of the travel motor 93. The swing position of the accelerator pedal 98 is detected by a pedal sensor 101, and the detection signal is transmitted to the ECU 40. The pedal sensor 101 corresponds to a neutral sensor that detects the N position of the accelerator pedal 98. The ECU 40 controls the drive of the travel motor 93 according to the detection signal of the pedal sensor 101. The detection signal of the pedal sensor 101 is also used to determine whether or not to drive the lawn mower 18.

The control system 80a includes the travel motor 93, the left and right wheel rotation sensors 61, a motor rotation sensor 102, the accelerator pedal 98, the pedal sensor 101, a parking brake instruction sensor 103, the lawn mower 18, and the ECU 40. The wheel rotation sensor 61 and the motor rotation sensor 102 correspond to revolution speed detection units, respectively. The motor rotation sensor 102 detects the revolution speed of the travel motor 93. Further, in the case of this example as well, as in the configuration of FIG. 3, the lawn mowing switch 33 is connected to the ECU 40, and the ECU 40 controls the drive of the lawn mowing drive motor 60 of the lawn mower 18.

Further, in the vehicle 10a, a swingable parking lever 104 is arranged on one of the left and right sides of the driver seat. The parking brake instruction sensor 103 detects the swing position of the parking lever 104. The parking lever 104, when operated upward, instructs the operation of a parking brake such as an electromagnetic brake.

The travel motor 93 is braked by an electromagnetic brake which is a parking brake controlled by the ECU 40. When the parking lever 104 is operated upward, the operation is detected by the parking brake instruction sensor 103 to thereby generate an on signal of the parking brake. When the parking lever 104 is operated downward, the operation is detected by the parking brake instruction sensor 103 to thereby turn off the parking brake. The detection signal of the parking lever 104 is transmitted to the ECU 40. According to the detection by the parking brake instruction sensor 103 that the parking lever 104 has been operated upward, the ECU 40 activates the electromagnetic brake to thereby stop the travel motor 93. The electromagnetic brake operates by being supplied with electric power from the battery 82. The structure of the electromagnetic brake is the same as that of the electromagnetic brakes 28 and 29 described with reference to FIG. 2. As in the configurations of FIG. 1 to FIG. 7, as a parking brake, instead of the electromagnetic brake, a configuration in which a member constituting a power transmission path between the travel motor 93 and the wheels 12 and 13, for example, a gear constituting the rear power transmission mechanism 95 on the rear side, is braked by being mechanically stopped is allowed, or braking the wheels 12 and 13 by operation of disk brakes provided at the wheels 12 and 13 is allowed.

Further, the detection values of the revolution speeds of the two left and right wheels 12 and 13 on the rear side are input to the ECU 40 from the left and right wheel rotation sensors 61. At this time, the detection values of the revolution speeds of the two wheels 91 and 92 on the front side may be input by the left and right wheel rotation sensors 61. Further, the detection value of the revolution speed of the travel motor 93 is input from the motor rotation sensor 102 to the ECU 40.

The lawn mowing switch 33 is connected to the ECU 40. The lawn mowing switch 33 has the automatic stop changeover switch 34 and the drive changeover switch 35, as in the configuration of FIG. 3. When the automatic stop changeover switch 34 is turned on, during the drive of the lawn mower 18, the ECU 40 stops the drive of the lawn mower 18 after the revolution speed of each of the left wheel 12 and the right wheel 13 is within the predetermined range near 0. Further, when the automatic stop changeover switch 34 is turned on, during the stop control of the lawn mower 18, the ECU 40 drives the lawn mower 18 when the accelerator pedal 98 is not in the N position and the parking lever 104 is not operated upward, that is, when the operation of the parking brake such as the electromagnetic brake is not instructed.

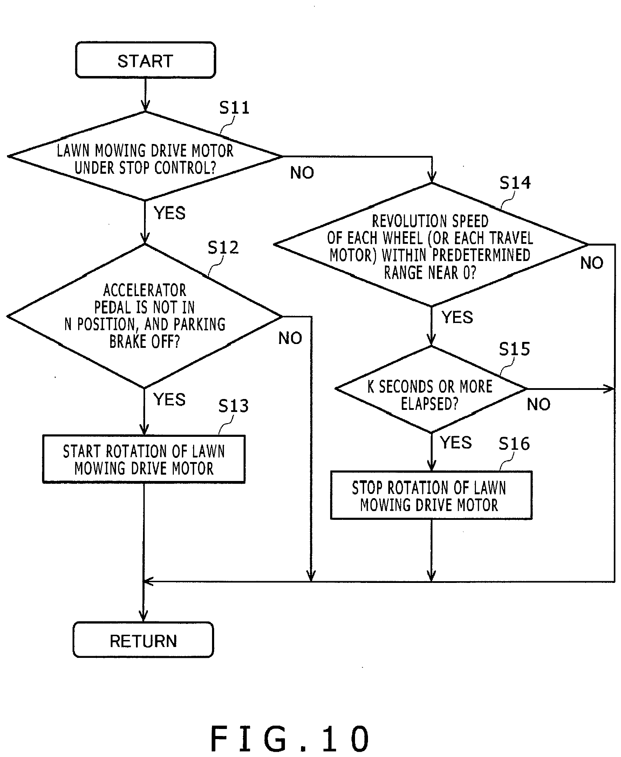

FIG. 10 is a flowchart illustrating a control method when the lawn mowing drive motor 60 is automatically rotated and stopped in another example of the embodiment. In step S11 of FIG. 10, the ECU 40 determines whether or not the lawn mowing drive motor 60 is under stop control, that is, whether or not the lawn mower 18 is under stop control. When the determination in step S11 is positive (YES), in step S12, the ECU 40 determines whether or not the accelerator pedal 98 is not in the N position and the parking lever 104 is not operated upward, that is, whether or not instruction for the operation of the parking brake is not issued. At this time, it may be deemed that the state in which the accelerator pedal 98 is not in the N position corresponds to the state in which the target revolution speed of the travel motor 93 is not zero. When the determination in step S12 is positive (YES), in step S13, the ECU 40 starts the rotation of the lawn mowing drive motor 60, that is, starts the rotation of the lawn mower 18, and the processing returns to step S11.

On the other hand, when the determination in step S12 is negative (NO), the ECU 40 maintains the state in which the lawn mowing drive motor 60 is under stop control, and the processing returns to step S11.

When the determination in step S11 is negative (NO), that is, when the lawn mower 18 is being driven, in step S14, in accordance with the detection signal from each of the wheel rotation sensors 61 the ECU 40, determines whether or not the revolution speed of each of the wheels 12 and 13 is within the predetermined range near zero (0). When the determination in step S14 is positive (YES), in step S15, the ECU 40 determines whether or not K seconds or more, for example, several seconds or more less than 10 seconds as a predetermined time, has elapsed from the time point when the revolution speed of each of the wheels 12 and 13 reaches within the predetermined range near 0. When the determination in step S15 is positive (YES), in step S16, the ECU 40 stops the rotation of the lawn mowing drive motor 60, that is, stops the rotation of the lawn mower 18, and the processing returns to step S11.

On the other hand, when the determination in step S14 is negative (NO) and when the determination in step S15 is negative (NO), the processing maintains the rotating state of the lawn mowing drive motor 60, and returns to step S11.

Also in the control system 80a of this example, as in the configurations of FIG. 1 to FIG. 7, the drive of the lawn mower 18 is automatically stopped when the travel of the vehicle 10a is stopped or substantially stopped, and the drive of the lawn mower 18 is automatically restarted when the travel of the vehicle 10a is restarted. As a result, any wasteful power consumption of the battery 82 for driving the lawn mower 18 can be suppressed without requiring a great deal of time and effort by the driver, so that the workable time can be extended.

In the above, the description has been given of the case in which, in step S14 of FIG. 10, the ECU 40 switches the operation between moving to step S15 and returning to step S11, depending on whether or not the revolution speed of each of the wheels 12 and 13 is within the predetermined range near zero (0). On the other hand, in step S14, the ECU 40 may switch the operation between moving to step S15 and returning to step S11, depending on whether the revolution speed of each of the wheels 12 and 13 is zero (0) or not. Alternatively, in step S14, the ECU 40 may determine, according to the detection signal from the motor rotation sensor 102, whether or not the revolution speed of the travel motor 93 is within the predetermined range near zero (0), or whether or not the revolution speed of the travel motor 93 is zero (0). In this case as well, similarly to the above, when the determination in step S14 is positive (YES), the processing moves to step S15, and when the determination in step S14 is negative (NO), the processing maintains the rotation of the lawn mowing drive motor 60, and returns to step S11. As a result, during the drive of the lawn mower 18, the ECU 40 stops the drive of the lawn mower 18 after the revolution speed of the travel motor 93 is zero (0) or within the predetermined range near zero (0). Instead of the motor rotation sensor 102, by using a rotation sensor that detects the revolution speed of a rotation member, for example, a gear, other than the travel motor 93, in the power transmission path from the travel motor 93 to the wheels 12 and 13, the ECU 40 may calculate the revolution speed of the travel motor 93 from the detection value of the rotation sensor.

Further, in this example, during the drive of the lawn mower 18, the ECU 40 stops the lawn mower 18 after an elapse of a predetermined time from the time point when the revolution speed of each of the two wheels 12 and 13 or the revolution speed of the travel motor 93 is zero (0) or within the predetermined range near zero (0). It is therefore possible to prevent the lawn mower 18 from being stopped during the pause when the driver pauses the vehicle 10a for a short time and immediately restarts the travel of the vehicle 10a, so that frequent short pauses of the lawn mower 18 can be suppressed. In this example, other configurations and operations are the same as those of FIG. 1 to FIG. 7.

Note that the control system 80a of this example may be combined with a configuration in which the two wheels 91 and 92 on the front side are the main drive wheels driven by the travel motor 93, and the two wheels 12 and 13 on the rear side are the driven wheels, unlike the configuration of FIG. 8.

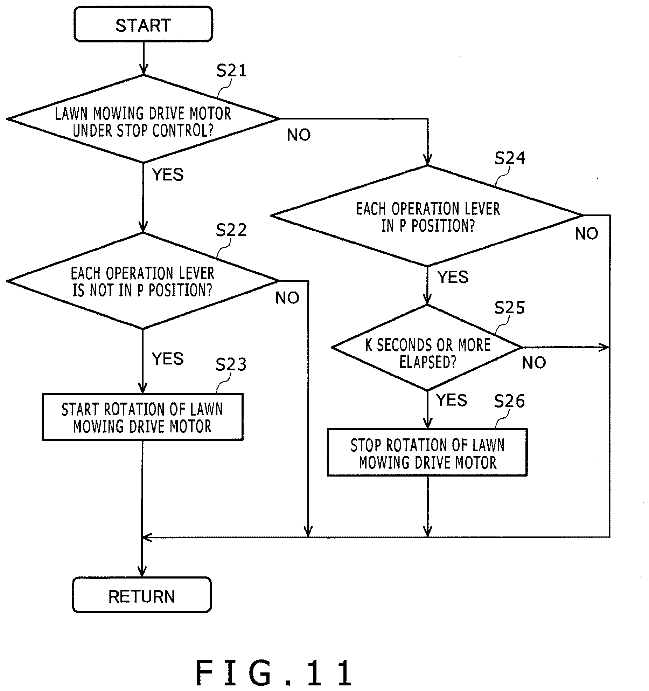

FIG. 11 is a flowchart illustrating a control method in the case where the lawn mowing drive motor is automatically rotated and stopped in another example of the embodiment. Hereinafter, description will be given using the reference numerals of FIG. 1 to FIG. 7. In the case of this example, unlike the configurations of FIG. 1 to FIG. 7, the ECU 40 of the control system, during the drive of the lawn mower 18, stops the drive of the lawn mower 18 when each of the operation levers 22 and 23 is in the P position, that is, when the operation of the parking brake is instructed, and during the stop control of the lawn mower 18, and drives the lawn mower 18 when each of the operation levers 22 and 23 is in the P position, that is, when the operation of the parking brake is not instructed. A control method using the control system of this example will be described with reference to FIG. 11.

In step S21 of FIG. 11, the ECU 40 determines whether or not the lawn mowing drive motor 60 is under stop control, that is, whether or not the lawn mower 18 is under stop control. When the determination in step S21 is positive (YES), in step S22, the ECU 40 determines whether or not each of the operation levers 22 and 23 is not in in the P position, that is, whether or not instruction for the operation of the parking brake operation is inactive. When the determination in step S22 is positive (YES), in step S23, the ECU 40 starts the rotation of the lawn mowing drive motor 60, that is, starts the rotation of the lawn mower 18, and the processing returns to step S21.

On the other hand, when the determination in step S22 is negative (NO), the ECU 40 maintains the state in which the lawn mowing drive motor 60 is under stop control, and the processing returns to step S21.

When the determination in step S21 is negative (NO), that is, when the lawn mowing drive motor 60 is rotating, in step S24, the ECU 40 determines whether or not each of the left and right operation levers 22 and 23 is in the P position, that is, whether or not the operation of the parking brake is instructed. When the determination in step S24 is positive (YES), in step S25, the ECU 40 determines whether or not K seconds or more, for example, several seconds or more less than 10 seconds, as the predetermined time, have elapsed from the time point when each of the operation levers 22 and 23 were in the P position. When the determination in step S25 is positive (YES), in step S26, the ECU 40 stops the rotation of the lawn mowing drive motor 60, that is, stops the rotation of the lawn mower 18, and the processing returns to step S21.

On the other hand, when the determination in step S24 is negative (NO) and when the determination in step S25 is negative (NO), the rotating state of the lawn mowing drive motor 60 is maintained, and the processing returns to step S21.

Also in the control system of this example, the lawn mower 18 is automatically stopped when the travel of the vehicle is stopped or substantially stopped, and the drive of the lawn mower 18 is automatically restarted when the travel of the vehicle is restarted, as in the configurations of FIG. 1 to FIG. 7. As a result, any wasteful power consumption of the battery for driving the lawn mower can be suppressed without requiring a great deal of time and effort by the driver, so that the workable time can be extended. Further, according to the configuration of this example, unlike the configurations of FIG. 1 to FIG. 7, it is not necessary to use the detection signal of the wheel rotation sensor 61 and the detection signal of the motor rotation sensor 81 in order to automatically switch the operation between driving and stopping the lawn mower 18. In this example, the other configurations and operations are the same as those of FIG. 1 to FIG. 7.

In addition, it can be so configured that, by combining the configuration of this example with the configurations of FIG. 8 to FIG. 10, the ECU 40, during the drive of the lawn mower 18, stops the drive of the lawn mower 18 when the operation of the parking brake is instructed, and during the stop control of the lawn mower 18, drives the lawn mower 18 when the operation of the parking brake is not instructed.

In each of the above examples, the lawn mowing switch 33 may be configured by only a switch that operates in the same manner as the automatic stop changeover switch 34 (FIG. 3). Further, in each of the above examples, it may be so configured that the lawn mowing drive motor 60 is a three-phase motor, an inverter is connected between the lawn mowing drive motor 60 and the battery 82, and the inverter is controlled by the ECU 40 to thereby drive the lawn mower 18. The meaning of stopping the drive of the lawn mower 18 also includes controlling the lawn mowing drive motor 60 to maintain the target revolution speed at 0.

Further, in each of the above examples, the case where the left motor 30 and the right motor 31 (FIG. 2) or the travel motor 93 (FIG. 8) are used as the continuously variable transmission for the vehicles 10 and 10a has been described, but the control system of the mowing vehicle according to the present disclosure is not limited to such a configuration. For example, an output shaft of a hydraulic motor of a left hydrostatic continuously variable transmission as a left continuously variable transmission may be connected to the left wheel, and an output shaft of a hydraulic motor of a right hydrostatic continuously variable transmission as a right continuously variable transmission may be connected to the right wheel. Each hydrostatic continuously variable transmission includes a hydraulic pump driven by an engine, a hydraulic motor, and a pair of oil passages for fluidly connecting the hydraulic pump and the hydraulic motor in a closed circuit. The hydraulic motor has a fixed swash plate, and the hydraulic pump is a volume control type having a movable skewed plate. By controlling the tilt angle and tilt direction of the movable skewed plate, the discharge amount and discharge direction of the hydraulic pump can be changed. Thereby, the rotational direction and rotational speed of the hydraulic motor can be controlled. The ECU sets the target revolution speeds of the two left and right hydraulic motors according to, for example, the detection positions of the operation positions of the left and right operation levers. Then, according to target revolution speeds thereof, the ECU moves the piston of the hydraulic servo mechanism, which is connected to move the movable skewed plate of the hydraulic pumps of the left and right continuously variable transmissions, by control of a proportional solenoid. As a result, the left wheel and the right wheel are independently driven in terms of the rotational direction and the rotational speed by the electric left continuously variable transmission and the electric right continuously variable transmission. Further, according to the operation of the two operation levers, the ECU controls the drive of the left continuously variable transmission and the right continuously variable transmission. Further, the revolution speed of a rotation member, such as a hydraulic motor, in the power transmission path from respective continuously variable transmissions to the corresponding wheels, is detected by the rotation sensor. In such a configuration, for example, as in the configuration of each of the above examples, a configuration may be adopted in which the ECU, during the drive of the lawn mower, stops the drive of the lawn mower after the revolution speed of each of the two wheels or the revolution speed of each of the hydraulic motors is zero (0) or within a predetermined range near zero (0), and during the stop control of the lawn mower, drives the lawn mower when a target revolution speed, issued by the acceleration instruction unit, of the two wheels or of each of the hydraulic motors is not zero (0), and the operation of the parking brake is not instructed.

At least one of the above embodiments has the configuration of the control system of the first to fourth lawn mowing vehicles according to the present disclosure. Thus, the lawn mower is automatically stopped when the travel of the vehicle is stopped or substantially stopped, and the drive of the lawn mower is automatically restarted when the travel of the vehicle is restarted, thus making it possible to suppress any wasteful power consumption of the battery for driving the lawn mower, without requiring a great deal of time and effort of the driver. Therefore, the workable time can be extended.

## Claims

1. A control system of a lawn mowing vehicle, comprising:
at least one continuously variable transmission drivingly connected to two left and right wheels;
a revolution speed detection unit that detects a revolution speed of each of the two wheels, or a revolution speed of a rotation member in a power transmission path from the at least one continuously variable transmission to the wheels;
an acceleration instruction unit that instructs acceleration of the at least one continuously variable transmission;
a parking brake instruction sensor that detects that an operation of a parking brake that, for parking, brakes the continuously variable transmission or brakes a member to which power is transmitted from the continuously variable transmission, is instructed;
a lawn mower; and
a control device that independently controls drive of the at least one continuously variable transmission and drive of the lawn mower,
wherein
the control device, during the drive of the lawn mower, stops the drive of the lawn mower after the revolution speed of each of the two wheels or the rotational speed of the at least one continuously variable transmission has become zero (0) or within a predetermined range near zero (0) and during stop control of the lawn mower, drives the lawn mower when a target revolution speed, issued by the acceleration instruction unit, of the two wheels or of the at least one continuously variable transmission is not zero (0) and the operation of the parking brake is not instructed.

2. A control system of a lawn mowing vehicle, comprising:
two left and right continuously variable transmissions drivingly connected to two left and right wheels;
a revolution speed detection unit that detects a revolution speed of each of the two wheels, or a revolution speed of each of the two continuously variable transmissions;
two left and right operation levers as acceleration instruction units;
a neutral sensor detects that the two operation levers are in neutral positions to set a target revolution speed of the two continuously variable transmissions to zero (0), or to stop generation of a driving force of the two continuously variable transmissions;
a parking brake instruction sensor that detects that an operation of a parking brake that, for parking, brakes the continuously variable transmission or brakes a member to which power is transmitted from the continuously variable transmission is instructed;
a lawn mower; and
a control device that independently controls drive of the two continuously variable transmissions and drive of the lawn mower;
wherein
the control device, during the drive of the lawn mower, stops the drive of the lawn mower after the revolution speed of each of the two wheels or the revolution speed of each of the two continuously variable transmission has become zero (0) or within a predetermined range near zero (0), and during stop control of the lawn mower, drives the lawn mower when each of the two operation levers is not in the neutral position and the operation of the parking brake is not instructed.

3. A control system of a lawn mowing vehicle, comprising:
a continuously variable transmission drivingly connected to two left and right wheels;
a revolution speed detection unit that detects a revolution speed of each of the two wheels, or a revolution speed of the continuously variable transmission;
an accelerator pedal as an acceleration instruction unit;
a neutral sensor detects that the accelerator pedal is in a neutral position to set a target revolution speed of the continuously variable transmission to zero (0), or to stop generation of a driving force of the continuously variable transmission;
a parking brake instruction sensor that detects that an operation of a parking brake that, for parking, brakes the continuously variable transmission or brakes a member to which power is transmitted from the continuously variable transmission is instructed;
a lawn mower; and
a control device that independently controls drive of the continuously variable transmission and drive of the lawn mower;
wherein
the control device, during the drive of the lawn mower, stops the drive of the lawn mower after the revolution speed of each of the two wheels or the revolution speed of the continuously variable transmission has become zero (0) or within a predetermined range near zero (0), and during stop control of the lawn mower, drives the lawn mower when the accelerator pedal is not in the neutral position and the operation of the parking brake is not instructed.

4. A control system of a lawn mowing vehicle, comprising:
at least one continuously variable transmission drivingly connected to two left and right wheels;
a parking brake instruction sensor that detects that an operation of a parking brake that, for parking, brakes the continuously variable transmission or brakes a member to which power is transmitted from the continuously variable transmission is instructed;
a lawn mower; and
a control device that independently controls drive of the at least one continuously variable transmission and drive of the lawn mower,
wherein
the control device, during the drive of the lawn mower, stops the drive of the lawn mower when the operation of the parking brake is instructed, and during stop control of the lawn mower, drives the lawn mower when the operation of the parking brake is not instructed.

5. The control system of the lawn mowing vehicle according to any one of claims 1 to 4, wherein
the control device, during the drive of the lawn mower,
stops the lawn mower after a predetermined time or more has elapsed from a time point when the revolution speed of each of the two wheels, a revolution speed of the continuously variable transmission, or revolution speeds of the two continuously variable transmissions are zero (0) or within the predetermined range near zero (0).
